# EUROPEAN PATENT APPLICATION

(11) **EP 4 340 308 A1**
(43) Date of publication of application: **20.03.2024**
(21) Application number: 23182047.3
(22) Date of filing: 28.06.2023
(51) Int. Cl.: H04L 27/26, H04W 84/02

(54) **EARLY TERMINATION OF PHYSICAL LAYER CONVERGENCE PROTOCOL DATA UNIT TRANSMISSION**

(30) Priority: 19.09.2022 US 202263407967 P
(71) Applicant: Intel Corporation, Santa Clara, CA 95054 (US)
(72) Inventor: LIRON, Oded, 30500 Givat-Ada (IL); STACEY, Robert, Portland, 97210 (US); HUANG, Po-Kai, San Jose, 95131 (US); LI, Qinghua, San Ramon, 94582 (US); MEYUHAS, Gil, Tel-Aviv (IL); ALEXANDER, Danny, Neve Efraim Monoson (IL); FANG, Juan, Portland, 97225 (US); KLEIN, Ofir, Petah Tikva (IL)
(74) Representative: Viering, Jentschura & Partner mbB Patent- und Rechtsanwälte

(57) **Abstract**

A device may include processing circuitry that is configured to generate a transmission comprising one or more symbols; cause a transceiver to begin sending the transmission; and cause the transceiver to send an instruction representing an early termination of the transmission.

## Description

### CROSS-REFERENCE TO RELATED APPLICATIONS

This application claims priority to U.S. Provisional Application 63/407,967, filed on September 19, 2022, the entire contents of which are incorporated herein by reference.

### TECHNICAL FIELD

This disclosure generally relates to systems and methods for wireless communications and, more particularly, to early termination of physical layer (PHY) convergence protocol data unit (PPDU) transmission.

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

### BRIEF DESCRIPTION OF THE DRAWINGS

FIG. 1 is a network diagram illustrating an example network environment for early termination, in accordance with one or more example embodiments of the present disclosure.
FIGs. 2-9 depict illustrative schematic diagrams for early termination, in accordance with one or more example embodiments of the present disclosure.
FIG. 10 illustrates a flow diagram of an illustrative process for an illustrative early termination system, in accordance with one or more example embodiments of the present disclosure.
FIG. 11 illustrates a functional diagram of an exemplary communication station that may be suitable for use as a user device, in accordance with one or more example embodiments of the present disclosure.
FIG. 12 illustrates a block diagram of an example machine upon which any of one or more techniques (e.g., methods) may be performed, in accordance with one or more example embodiments of the present disclosure.
FIG. 13 is a block diagram of a radio architecture in accordance with some examples.
FIG. 14 illustrates an example front-end module circuitry for use in the radio architecture of FIG. 13, in accordance with one or more example embodiments of the present disclosure.
FIG. 15 illustrates an example radio integrated circuit (IC) circuitry for use in the radio architecture of FIG. 13, in accordance with one or more example embodiments of the present disclosure.
FIG. 16 illustrates an example baseband processing circuitry for use in the radio architecture of FIG. 13, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

In the conventional PPDU transmission, the transmitter calculates the duration of the PPDU and sets the duration indication of the PPDU in the preamble before sending the data orthogonal frequency division multiplexing (OFDM) symbols. Due to various reasons, e.g., the coexistence with Bluetooth, the transmission of urgent message, and input-dependent shaping encoding, the transmission may need to be terminated before the time set in the preamble.

There is no explicit signal at the termination time instance to ensure the detection of the termination and hold the channel for the next frame.

Example embodiments of the present disclosure relate to systems, methods, and devices for early termination of physical layer (PHY) convergence protocol data unit (PPDU) transmission.

In one or more embodiments, an early termination system may facilitate explicit signals at the termination time instance to ensure the detection of the termination and hold the medium for the next operation.

Early termination reduces the latency of data transmissions and improves the coexistence with Bluetooth and the efficiency of probabilistic constellation shaping. In addition, if the PPDU transmission can be terminated adaptively, the transmitter does not need to wait until all the data arrives before preparing the transmission. This reduces the latency and buffer size.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

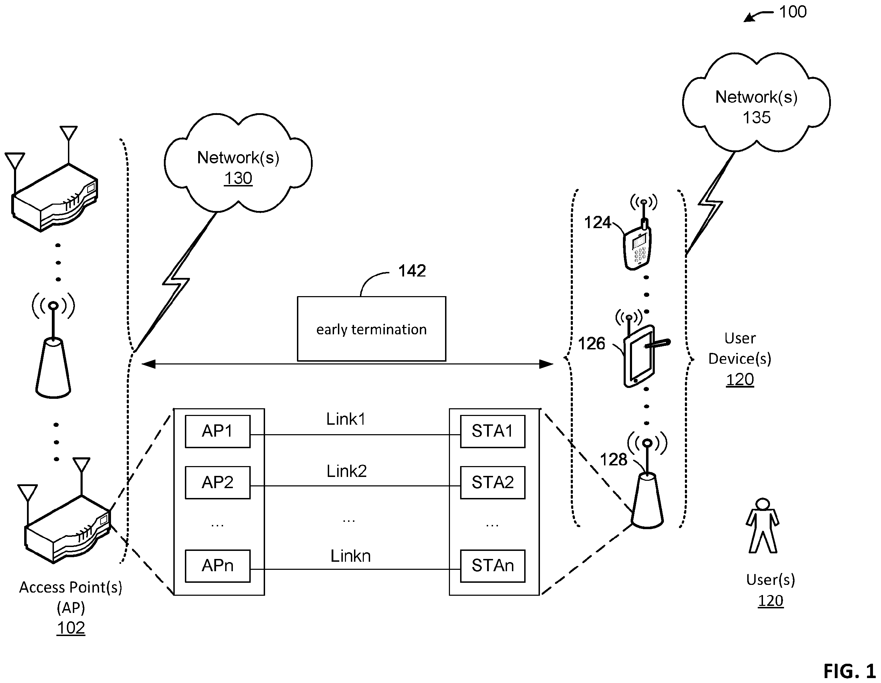

FIG. 1 is a network diagram illustrating an example network environment of early termination, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

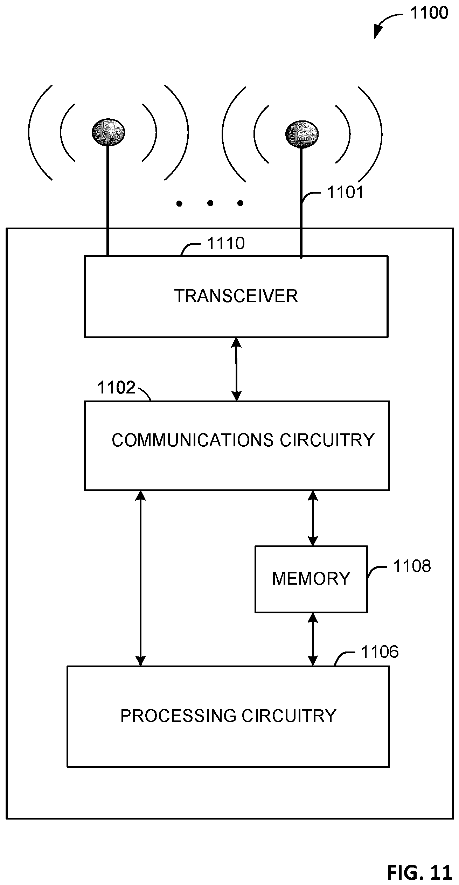

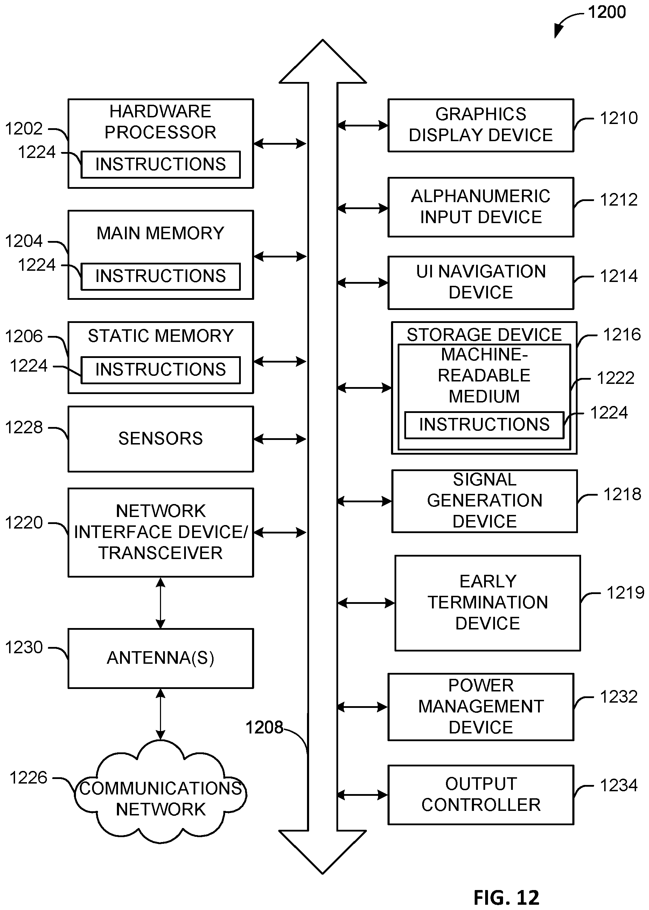

In some embodiments, the user devices 120 and the AP 102 may include one or more computer systems similar to that of the functional diagram of FIG. 11 and/or the example machine/system of FIG. 12.

One or more illustrative user device(s) 120 and/or AP(s) 102 may be operable by one or more user(s) 110. It should be noted that any addressable unit may be a station (STA). An STA may take on multiple distinct characteristics, each of which may shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a personal digital assistant (PDA) device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable global positioning system (GPS) device, a digital video broadcasting (DVB) device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an audio/video (A/V) device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any obj ect (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, application specific integrated circuit (ASIC), or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or Third Generation Partnership Project (3GPP) standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and/or AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using radiofrequency (RF) beamforming and/or digital beamforming. In some embodiments, in performing a given MIMO transmission, a user device 120 and/or AP 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, etc.), 6 GHz channels (e.g., 802.11ax, 802.11be, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement an early termination 142 with one or more user devices 120. The one or more APs 102 may be multi-link devices (MLDs) and the one or more user device 120 may be non-AP MLDs. Each of the one or more APs 102 may comprise a plurality of individual APs (e.g., AP1, AP2, ..., APn, where n is an integer) and each of the one or more user devices 120 may comprise a plurality of individual STAs (e.g., STA1, STA2, ..., STAn). The AP MLDs and the non-AP MLDs may set up one or more links (e.g., Link1, Link2, ..., Linkn) between each of the individual APs and STAs. It is understood that the above descriptions are for purposes of illustration and are not meant to be limiting.

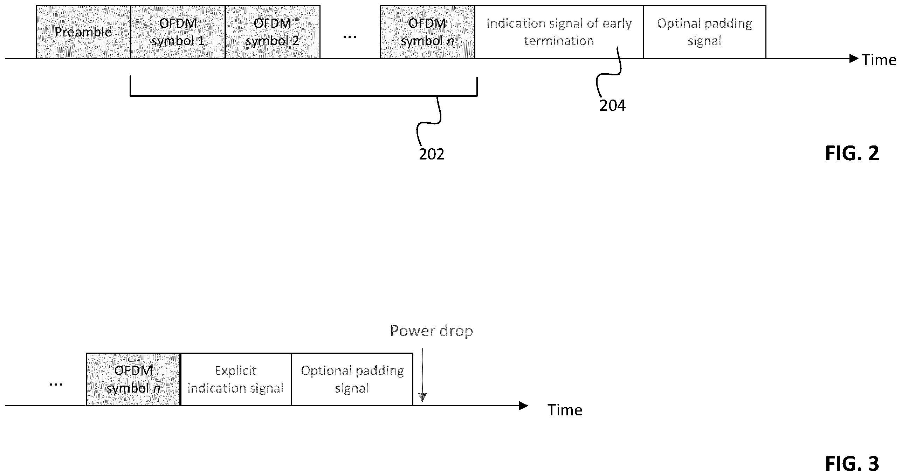

FIGs. 2-6 depict illustrative schematic diagrams for early termination, in accordance with one or more example embodiments of the present disclosure.

In one or more embodiments, an early termination system may facilitate an indication of early termination.

The early termination of PPDU transmission is shown in FIG. 2. Note that the termination does not have to be at the OFDM symbol boundary. Although the termination at the OFDM symbol boundary avoids wasting the OFDM symbol that is partially finished, it may incur some latency for transmitting the subsequent urgent message. In FIG. 2, the device transmits one or more symbols 202, followed by an indication signal of early termination 204. The indication signal of early termination 204 explicitly tells the receiver that the PPDU transmission is terminated. The optional padding signal is for holding the channel so that other devices cannot grab the channel. The optional signal may be the signal used in the packet extension or may be the same as the indication signal. The optional padding signal and the indication signal of early termination can be combined into one signal in some cases.

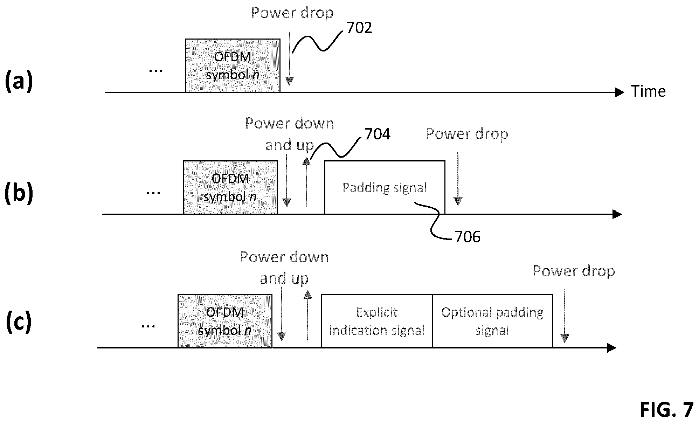

The proposed design is shown in FIG. 3, where an explicit indication signal follows the terminated data transmission. Several other design options with backward compatibility are shown in FIG. 7, where a power drop 702 follows the early termination.

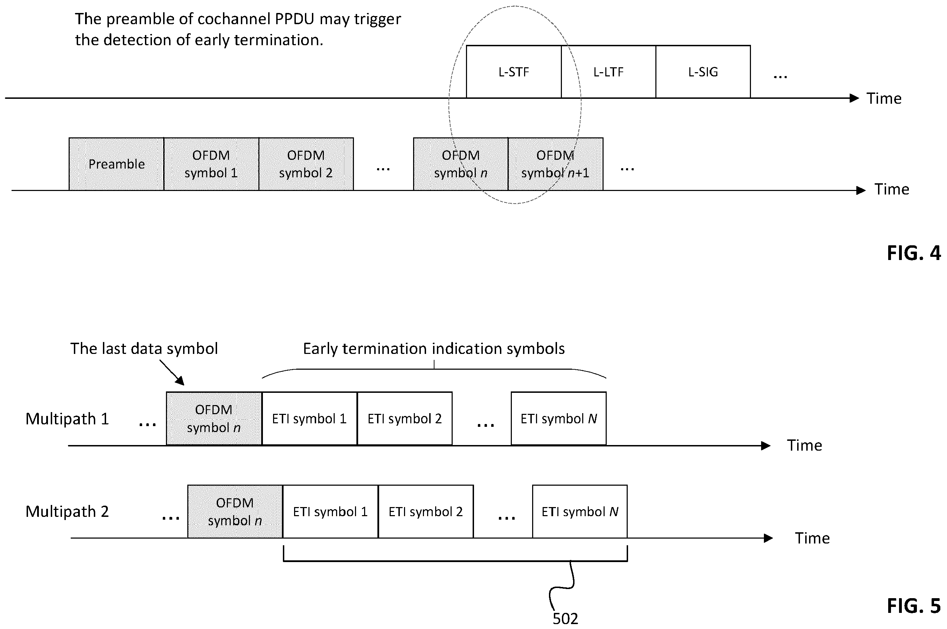

There are two ways to design the explicit indication signal in FIGs. 2 and 5, i.e., in time domain and frequency domain approaches.

The time domain approach allows the receiver to detect the indication signal in the time domain without going into the frequency domain for low complexity and low latency. An example of the time domain indication signal is a periodic signal. A short training field signal (STF) that is periodic may be used for simplicity since the detector of the STF is already built in the existing device. However, reusing the STF has a downside as illustrated in FIG. 4. A false alarm of early termination may be caused by the STF of a hidden node transmission. There are two solutions. In the first solution, it is desired that the period of the time domain indication signal is different from the K-th multiple and a K-th of the period of the existing STF, where K is an integer, such as 1, 2, 3, and 4. This can avoid the false alarm caused by a co-channel PPDU. The period of the existing STF is 0.8 microseconds. The period of the indication signal may be approximately 0.6, 1, 1.2, 1.4, 1.8, 2.0 microseconds, or the like. To minimize the distortion, it is desired that the indication signal has a low peak to average power ration (PAPR). In the second solution, the duration of the explicit indication signal can be different from, or longer than, the existing STF, e.g., 8 microseconds so that the explicit indication signal will not be confused with the STF. For example, the legacy short training field (L-STF) consists of ten 0.8-microsecond STF symbols and the explicit indication signal can consist of sixteen 0.8-microsecond STF symbols with a duration of 12.8 microseconds. If the receiver detects more than ten periods, the explicit indication signal is declared.

Since the received signal is subject to multipath fading as illustrated in FIG. 5, the first early termination indication (ETI) symbol may be interfered by the last data symbol. Therefore, it is desired to have two or more than two ETI symbols for high reliability, as depicted by ETI symbols 1-N 502. The number of ETI symbols may be known by the receiver from the 802.11 specification, the negotiation phase, the capacity indication, the beacon, or the preamble of the terminated PPDU. The optional padding may not be needed because a large number of ETI symbols may be used to hold the channel. If the transmitter sends the same ETI symbol many times, it may not meet the spectrum regulations. In this case, a phase change may be applied across the ETI symbols. For example, the polarity of the second half of the ETI symbols may be flipped.

Beyond the periodicity, the time domain approach can utilize other special properties of the ETI signal to indicate the early termination. For a first example, the ETI signal may choose a subset of the frequency band, e.g., the lower or higher portion of the band and even or old subcarriers, to send the ETI signal. The early termination detection can be done by checking the output of a bandpass (or low pass or high pass) filter. For a second example, the ETI signal may have a good auto-correlation property, such as in Zadoff-Chu sequences. For example, the 1^{st} ETI symbol may be a Zadoff-Chu sequence and the second 2^{nd} ETI symbol may be the same sequence with a pre-defined cyclic shift. The early termination detection can be done by checking the cross-correlation between the received samples and the Zadoff-Chu sequence or the cross-correlation between the received samples of the two ETI symbols.

Because the STF has a period shorter than that of the long training field (LTF), one may prefer an STF to an LTF for a quicker termination indication. To address the false alarm caused by a co-channel STF transmission, the channel difference between the desired link and interfering link can be exploited. Although the STF period of both links is the same, the channel responses are different. Note that the channel response of the desired link is already known by the receiver for receiving the data symbols. The received signal of any transmitted signal can be calculated by convolving the transmitted signal with the known channel impulse response. Therefore, the receiver can calculate or simulate the received signal of any transmitted signal with the knowledge of the channel response. If the ETI signal is the STF symbol(s), for detecting the ETI signal, the receiver can either use the STF signal previously received from the preamble of the terminating PPDU or calculate the received STF signal using the transmitted STF signal and the channel response in order to match against the received signal in time domain. Since the co-channel interfering STF signal goes through a different channel, the received, interfering STF signal does not match the calculated or stored STF signal of the desired link so that no false alarm is triggered. This solution addresses the problem in FIG. 4 at the cost of complexity. In addition to the STF signal, this idea is applicable to any transmitted signal known to the receiver, e.g., signals with a period shorter than the LTF.

The STF signal can also be processed using the frequency domain approach described in the following. The STF signal can also be treated as a known, frequency-domain sequence populated only on a subset of subcarriers, i.e., every 4^{th} data subcarrier.

Alternatively, frequency domain detection can be used to detect the early termination. For OFDM data reception, the receiver converts the time domain samples into the frequency domain. To reuse the hardware, the ETI symbol can be an OFDM symbol similar to the data OFDM symbols. For example, the ETI symbol can have the same symbol duration and guard interval duration as those of the data OFDM symbol so that the receiver just reuses the existing hardware to convert the time domain samples of the ETI symbol to the frequency domain. In the frequency domain, the receiver checks whether the quadrature amplitude modulation (QAM) symbols carried by the subcarriers in the frequency domain match those defined for the early termination indication. For one example, the zero sequence may be used. Namely, there is no signal power on the data subcarriers while the pilot signal may or may not be present on the pilot subcarriers. For another example, the LTF sequence with binary phase-shift keying (BPSK) symbols, i.e., +1s and -1s may be used as the sequence to indicate the early termination. Namely, the receiver checks whether the symbol sequence in the frequency domain matches the LTF sequence. If it matches, then early termination is declared. Since the early termination indication is carried by subcarriers, it may not be needed to use all the subcarriers to carry the indication. For one example, the indication may even be carried by a subset of subcarriers like the pilot subcarriers or the subcarriers unused by the data OFDM symbol. Specifically, the indication be even carried by the pilot or unused subcarrier in the last data OFDM symbol(s). In this case, dedicated ETI symbols may not be needed. For another example, STF symbols can be treated as a sequence of BPSK symbols populated on every 4^{th} data subcarrier in the frequency domain. Even though the ETI symbols can be different symbol by symbol in the frequency domain approach, it is desired to keep them the same as those in the time domain approach as shown in FIG. 5. To meet the spectrum regulation, a phase change may be applied across the ETI symbols. For example, the polarity of the second half of the ETI symbols may be flipped. For maintaining the time synchronization, the pilot signals in data OFDM symbols may continue in the ETI symbols so that the receiver can use the pilot signals for correcting the frequency offset.

Because the channel response of a co-channel link differs from that of the early terminating link and the frequency domain approach like the LTF sequence is checked after the channel effect (or channel response) is removed, the frequency domain approach like the LTF symbol is robust to the false alarm caused by a co-channel PPDU. Since the LTF symbol and STF symbols have low PAPRs, both the LTF symbol and STF symbols are desirable options for the ETI signal.

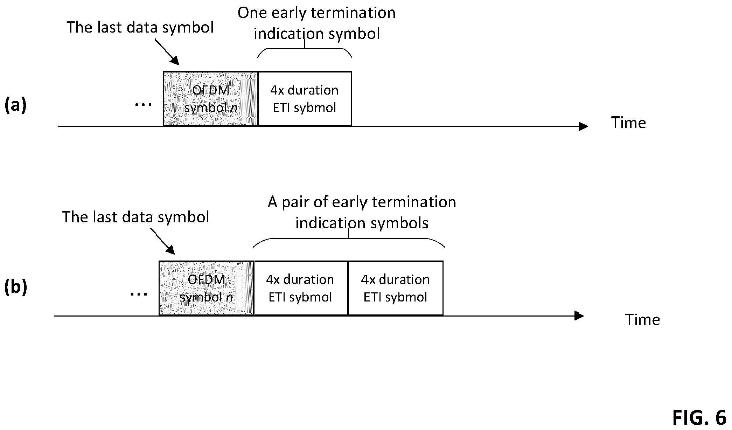

For the time domain approach that relies on periodic signals, it requires multiple repeated symbols as illustrated in FIG. 5. In contrast, the frequency domain approach does not rely on the periodic signals. Instead, it relies on the signature sequence(s) carried by the subcarriers of each ETI symbol. Therefore, the frequency domain approach can even work with only one ETI symbol, or a sequence of different ETI symbols, or a sequence of the same ETI symbol like the time domain approach. For example, if one 4x duration OFDM symbol is long enough for the channel holding, a single 4x duration OFDM symbol, e.g., with 13.6 microseconds can be used as illustrated in FIG. 6A. The reason to choose 4x duration OFDM symbol is to keep the symbol duration the same as the data symbol so that the existing hardware can be reused. If one wants to use the STF symbols for the early termination indication, for reusing the Fast Fourier Transform (FFT) hardware, the number of STF symbols can be 16 plus a guard interval, e.g., 0.8 microsecond such that the total duration is 12.8 microseconds plus a guard interval, e.g., 13.6 microseconds, matching the duration of the 4x data symbol. The time domain and frequency domain approaches can also be used jointly as illustrated in FIG. 6B, where the same ETI symbols are send twice.

In one or more embodiments, an early termination system may use power change as part of the explicit indication signal.

Since the detection of power drop during the PPDU reception is already implemented by some chip vendors, the power drop can be used as part of the explicit indication signal for the early termination as illustrated in FIG. 7.

### Option (a).

The early termination system uses only the power drop (e.g. reduction of power) 702 to indicate the early termination. Although the power drop detection has been implemented in some legacy devices, it does not hold the channel. If the receiver wants the transmitter to hold the channel for the receiver to detect the early termination and prepare the acknowledgement of the unfinished data frame, Option (a) does not work well. In addition, because Option (a) does not provide an explicit signal for detecting the termination edge, the termination needs to be at a specific time with respect to the OFDM symbol boundary, e.g., at the OFDM symbol boundary. To address the problem, e.g., the channel holding for the receiver (to prepare the block acks (e.g. acknowledgements)), the transmitter may send a PPDU after the terminated PPDU. The new PPDU may carry a Block Ack Request frame to solicit the block acks of the message protocol data units (MPDUs) in the terminated PPDU and the Block Ack Request may further confirm or indicate that the previous PPDU is terminated early.

### Option (b).

A padding signal 706 is added to Option (a) for holding the channel. In addition, the power ramp up (e.g. increase in power) 704 following the power drop may be used as part of the indication. The time interval between the power down and up should be defined in the 802.11 specification for indicating the early termination and should not be longer than the Short Interframe Space (SIFS), e.g., the duration of one data OFDM symbol.

Because of the first power drop, the (legacy) receiver may unlock its automatic gain control (AGC) for receiving the padding signal. This may cause some latency in detecting the second power drop. In addition, because time synchronization may be required for the portion of the padding signal and reliable detection of the second power drop is also required, it is desirable to define an explicit indication signal instead of undefined padding signal.

### Option (c).

An explicit indication signal is added to Option (b). In addition, the power ramp up following the power drop may be used as part of the indication. The time interval between the power down and up should be defined in the 802.11 specification for indicating the early termination and should not be longer than SIPS, e.g., the duration of one data OFDM symbol.

The early termination is indicated by the first power drop and the explicit indication signal and, in some circumstances, the power ramp up. In addition, the explicit indication signal may also provide a synchronization signal to maintain the symbol boundary and keep track of the frequency offset. The explicit indication signal can be long so that the channel can be held long enough. In this case, the optional padding signal is not needed. Since the receiver can keep track of the symbol boundary using the explicit indication signal, the receiver does not solely rely on the second power drop for maintaining the timing of the symbol boundary.

The explicit indication signal can be the same as the ones described in the previous subsections, i.e., Time Domain Approach and Frequency Domain Approach.

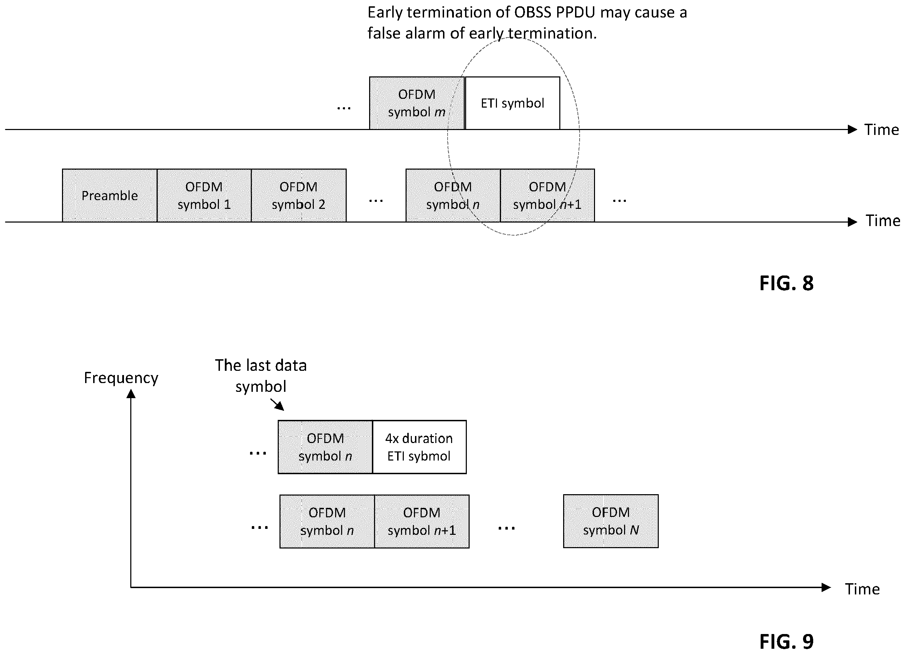

In one or more embodiments, an early termination system may facilitate reliable designs for multi-basic service set (BSS) scenario. In the previous designs, all the devices share the same ETI signal. If only the periodicity of the ETI signal is utilized, sharing the same ETI signal may be unreliable in multi-BSS scenario as illustrated in FIG. 8. When one of the two concurrent links in the neighborhood sends the shared early termination signal, the receiver of the other link may receive a false alarm of early termination and stop receiving the data symbols. The concurrent transmissions may be due to the hidden node problem or aggressive spatial reuse.

To address this problem, an early termination system may rely on the channel difference between the desired link and the interfering link. Beside those solutions, different BSSs or different concurrent transmissions may use different ETI signals, respectively so that the receiver of one BSS cannot be triggered by the ETI signal of the other BSSs. For a first example, different BSSs may use different periods in their ETI signals, respectively. For a second example, different BSSs may use different sequences with good auto-correlation property like Zadoff-Chu sequences, e.g., with different cyclic delays, respectively. For a third example, different BSSs may use different subsets of the frequency band to carry the signal powers of ETI signals, respectively. For a fourth example, different BSSs may use different sequences on the subcarriers of the ETI symbols, respectively.

### FIG. 8.

In one or more embodiments, an early termination system may facilitate early termination of multi-user (MU) transmission. Multiuser transmission (MU) involves multiple devices or multiple links. In the downlink, the AP sends data to multiple STAs using OFDMA or downlink multiuser multiple input multiple output (MU-MIMO). In the uplink, multiple STAs send data to AP using OFDMA or uplink MU-MIMO. If the transmission of one of the links needs to be terminated early, the ETI signal needs to be sent only in the allocated frequency resource unit (RU) or the allocated spatial channel for the link. An example is illustrated in FIG. 9 for OFDMA case. The link on the upper resource unit (RU) is terminated early and sends an ETI symbol on the allocated RU. To localize the ETI signal in frequency, it is easier to define the ETI signal in frequency domain like STF. Although the STF is used in the time domain, it is convenient to define the STF in the frequency domain in the 802.11 specification because the full band STF needs to be truncated or punctured in the frequency domain to fit into the allocated RU and discontinuous RU. Similarly, the ETI signal defined for the full band needs to be truncated or punctured in the frequency domain for the allocated RU and discontinuous RU.

In 6 GHz band, to support subchannel puncturing, even for single user transmission (SU), the ETI signal defined for the full band needs to be truncated or punctured in the frequency domain for the discontinuous band.

In one or more embodiments, an early termination system may facilitate additional indication for early termination. After the PPDU is terminated early, the transmitter or the receiver may have a follow up operation. For example, the block acknowledgement (BA) may be sent by the PPDU receiver SIFS time after the termination. This is referred to as immediate BA. For another example, the transmitter of PPDU may want to send a block ack request (BAR) to solicit the BA when the transmitter is ready. This is referred to as delayed BA. Moreover, the duration of the ETI signal and the duration of the optional padding signal may need to be exchanged between the transmitter and receiver. The operation parameters or rules or preferences or capabilities of these kinds of operations can be specified beforehand, e.g., in the negotiation phase or association phase or beacon. The parameters or rules or preferences or capabilities may remain unchanged after they are selected. Alternatively, dynamic indication may be used. The dynamically selected parameter or rule or preference or capability can be indicated in the preamble of the terminated PPDU or a frame before the PPDU like request to send (RTS), clear to send (CTS), trigger frame. In addition, the parameter or rule or preference or capability can be indicated by the ETI signal. For example, the phase of ETI signal (positive and negative) or the sequence of ETI signal can be used to indicate the selection of the parameter or rule or preference or capability. If one ETI symbol is not enough, multiple ETI symbols may be used to carry the selections.

It is understood that the above descriptions are for purposes of illustration and are not meant to be limiting.

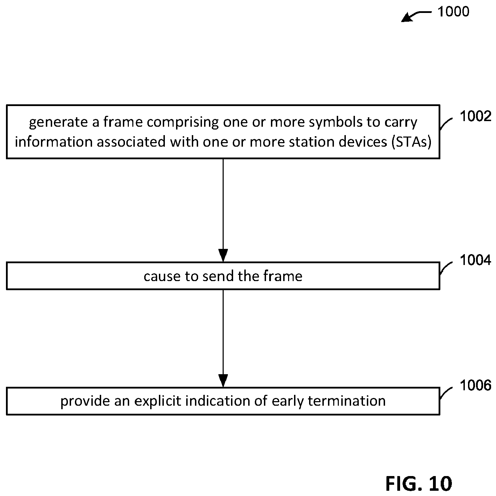

FIG. 10 illustrates a flow diagram of illustrative process 1000 for an early termination system, in accordance with one or more example embodiments of the present disclosure.

At block 1002, a device (e.g., the user device(s) 120 and/or the AP 102 of FIG. 1 and/or the early termination device 1219 of FIG. 12) may generate a frame comprising one or more symbols to carry information associated with one or more station devices (STAs).

At block 1004, the device may cause to send the frame.

At block 1006, the device may provide an explicit indication of early termination.

It is understood that the above descriptions are for purposes of illustration and are not meant to be limiting.

FIG. 11 shows a functional diagram of an exemplary communication station 1100, in accordance with one or more example embodiments of the present disclosure. In one embodiment, FIG. 11 illustrates a functional block diagram of a communication station that may be suitable for use as an AP 102 (FIG. 1) or a user device 120 (FIG. 1) in accordance with some embodiments. The communication station 1100 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 1100 may include communications circuitry 1102 and a transceiver 1110 for transmitting and receiving signals to and from other communication stations using one or more antennas 1101. The communications circuitry 1102 may include circuitry that can operate the physical layer (PHY) communications and/or medium access control (MAC) communications for controlling access to the wireless medium, and/or any other communications layers for transmitting and receiving signals. The communication station 1100 may also include processing circuitry 1106 and memory 1108 configured to perform the operations described herein. In some embodiments, the communications circuitry 1102 and the processing circuitry 1106 may be configured to perform operations detailed in the above figures, diagrams, and flows.

In accordance with some embodiments, the communications circuitry 1102 may be configured to contend for a wireless medium and configure frames or packets for communicating over the wireless medium. The communications circuitry 1102 may be configured to transmit and receive signals. The communications circuitry 1102 may also include circuitry for modulation/demodulation, upconversion/downconversion, filtering, amplification, etc. In some embodiments, the processing circuitry 1106 of the communication station 1100 may include one or more processors. In other embodiments, two or more antennas 1101 may be coupled to the communications circuitry 1102 configured for sending and receiving signals. The memory 1108 may store information for configuring the processing circuitry 1106 to perform operations for configuring and transmitting message frames and performing the various operations described herein. The memory 1108 may include any type of memory, including non-transitory memory, for storing information in a form readable by a machine (e.g., a computer). For example, the memory 1108 may include a computer-readable storage device, read-only memory (ROM), random-access memory (RAM), magnetic disk storage media, optical storage media, flash-memory devices and other storage devices and media.

In some embodiments, the communication station 1100 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 1100 may include one or more antennas 1101. The antennas 1101 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 1100 may include one or more of a keyboard, a display, a non-volatile memory port, multiple antennas, a graphics processor, an application processor, speakers, and other mobile device elements. The display may be an liquid crystal display (LCD) screen including a touch screen.

Although the communication station 1100 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 1100 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 1100 may include one or more processors and may be configured with instructions stored on a computer-readable storage device, such as, for example, a non-transitory computer readable medium.

FIG. 12 illustrates a block diagram of an example of a machine 1200 or system upon which any one or more of the techniques (e.g., methodologies) discussed herein may be performed. In other embodiments, the machine 1200 may operate as a standalone device or may be connected (e.g., networked) to other machines. In a networked deployment, the machine 1200 may operate in the capacity of a server machine, a client machine, or both in server-client network environments. In an example, the machine 1200 may act as a peer machine in peer-to-peer (P2P) (or other distributed) network environments. The machine 1200 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units (e.g. one or more processors) to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 1200 may include a hardware processor 1202 (e.g., a central processing unit (CPU), a graphics processing unit (GPU), a hardware processor core, or any combination thereof), a main memory 1204 and a static memory 1206, some or all of which may communicate with each other via an interlink (e.g., bus) 1208. The machine 1200 may further include a power management device 1232, a graphics display device 1210, an alphanumeric input device 1212 (e.g., a keyboard), and a user interface (UI) navigation device 1214 (e.g., a mouse). In an example, the graphics display device 1210, alphanumeric input device 1212, and UI navigation device 1214 may be a touch screen display. The machine 1200 may additionally include a storage device (i.e., drive unit) 1216, a signal generation device 1218 (e.g., a speaker), an early termination device 1219, a network interface device/transceiver 1220 coupled to antenna(s) 1230, and one or more sensors 1228, such as a global positioning system (GPS) sensor, a compass, an accelerometer, or other sensor. The machine 1200 may include an output controller 1234, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 1202 for generation and processing of the baseband signals and for controlling operations of the main memory 1204, the storage device 1216, and/or the early termination device 1219. The baseband processor may be provided on a single radio card, a single chip, or an integrated circuit (IC).

The storage device 1216 may include a machine readable medium 1222 on which is stored one or more sets of data structures or instructions 1224 (e.g., software) embodying or utilized by any one or more of the techniques or functions described herein. The instructions 1224 may also reside, completely or at least partially, within the main memory 1204, within the static memory 1206, or within the hardware processor 1202 during execution thereof by the machine 1200. In an example, one or any combination of the hardware processor 1202, the main memory 1204, the static memory 1206, or the storage device 1216 may constitute machine-readable media.

The early termination device 1219 may carry out or perform any of the operations and processes (e.g., process 1000) described and shown above.

It is understood that the above are only a subset of what the early termination device 1219 may be configured to perform and that other functions included throughout this disclosure may also be performed by the early termination device 1219.

While the machine-readable medium 1222 is illustrated as a single medium, the term "machine-readable medium" may include a single medium or multiple media (e.g., a centralized or distributed database, and/or associated caches and servers) configured to store the one or more instructions 1224.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 1200 and that cause the machine 1200 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and compact disc read only memory (CD-ROM) and DVD- ROM disks.

The instructions 1224 may further be transmitted or received over a communications network 1226 using a transmission medium via the network interface device/transceiver 1220 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 1220 may include one or more physical jacks (e.g., Ethernet, coaxial, or phone jacks) or one or more antennas to connect to the communications network 1226. In an example, the network interface device/transceiver 1220 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 1200 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

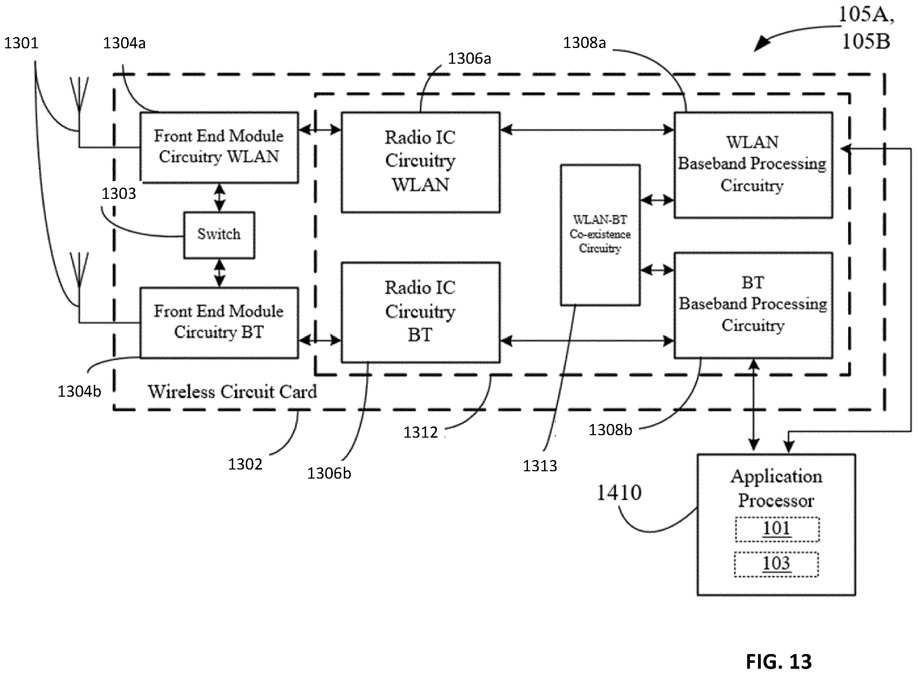

FIG. 13 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 1604a-b, radio IC circuitry 1306a-b and baseband processing circuitry 1308a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 1304a-b may include a WLAN or Wi-Fi FEM circuitry 1304a and a Bluetooth (BT) FEM circuitry 1304b. The WLAN FEM circuitry 1304a may include a receive signal path comprising circuitry configured to operate on WLAN RF signals received from one or more antennas 1301, to amplify the received signals and to provide the amplified versions of the received signals to the WLAN radio IC circuitry 1306a for further processing. The BT FEM circuitry 1304b may include a receive signal path which may include circuitry configured to operate on BT RF signals received from one or more antennas 1301, to amplify the received signals and to provide the amplified versions of the received signals to the BT radio IC circuitry 1306b for further processing. FEM circuitry 1304a may also include a transmit signal path which may include circuitry configured to amplify WLAN signals provided by the radio IC circuitry 1306a for wireless transmission by one or more of the antennas 1301. In addition, FEM circuitry 1304b may also include a transmit signal path which may include circuitry configured to amplify BT signals provided by the radio IC circuitry 1306b for wireless transmission by the one or more antennas. In the embodiment of FIG. 13, although FEM 1304a and FEM 1304b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 1306a-b as shown may include WLAN radio IC circuitry 1306a and BT radio IC circuitry 1306b. The WLAN radio IC circuitry 1306a may include a receive signal path which may include circuitry to down-convert WLAN RF signals received from the FEM circuitry 1304a and provide baseband signals to WLAN baseband processing circuitry 1308a. BT radio IC circuitry 1306b may in turn include a receive signal path which may include circuitry to down-convert BT RF signals received from the FEM circuitry 1304b and provide baseband signals to BT baseband processing circuitry 1308b. WLAN radio IC circuitry 1306a may also include a transmit signal path which may include circuitry to up-convert WLAN baseband signals provided by the WLAN baseband processing circuitry 1308a and provide WLAN RF output signals to the FEM circuitry 1304a for subsequent wireless transmission by the one or more antennas 1301. BT radio IC circuitry 1306b may also include a transmit signal path which may include circuitry to up-convert BT baseband signals provided by the BT baseband processing circuitry 1308b and provide BT RF output signals to the FEM circuitry 1304b for subsequent wireless transmission by the one or more antennas 1301. In the embodiment of FIG. 13, although radio IC circuitries 1306a and 1306b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 1308a-b may include a WLAN baseband processing circuitry 1308a and a BT baseband processing circuitry 1308b. The WLAN baseband processing circuitry 1308a may include a memory, such as, for example, a set of RAM arrays in a Fast Fourier Transform or Inverse Fast Fourier Transform block (not shown) of the WLAN baseband processing circuitry 1308a. Each of the WLAN baseband circuitry 1308a and the BT baseband circuitry 1308b may further include one or more processors and control logic to process the signals received from the corresponding WLAN or BT receive signal path of the radio IC circuitry 1306a-b, and to also generate corresponding WLAN or BT baseband signals for the transmit signal path of the radio IC circuitry 1306a-b. Each of the baseband processing circuitries 1308a and 1308b may further include physical layer (PHY) and medium access control layer (MAC) circuitry, and may further interface with a device for generation and processing of the baseband signals and for controlling operations of the radio IC circuitry 1306a-b.

Referring still to FIG. 13, according to the shown embodiment, wireless local area network - Bluetooth (WLAN-BT) coexistence circuitry 1313 may include logic providing an interface between the WLAN baseband circuitry 1308a and the BT baseband circuitry 1308b to enable use cases requiring WLAN and BT coexistence. In addition, a switch 1303 may be provided between the WLAN FEM circuitry 1304a and the BT FEM circuitry 1304b to allow switching between the WLAN and BT radios according to application needs. In addition, although the antennas 1301 are depicted as being respectively connected to the WLAN FEM circuitry 1304a and the BT FEM circuitry 1304b, embodiments include within their scope the sharing of one or more antennas as between the WLAN and BT FEMs, or the provision of more than one antenna connected to each of FEM 1304a or 1304b.

In some embodiments, the front-end module circuitry 1304a-b, the radio IC circuitry 1306a-b, and baseband processing circuitry 1308a-b may be provided on a single radio card, such as wireless radio card 1302. In some other embodiments, the one or more antennas 1301, the FEM circuitry 1304a-b and the radio IC circuitry 1306a-b may be provided on a single radio card. In some other embodiments, the radio IC circuitry 1306a-b and the baseband processing circuitry 1308a-b may be provided on a single chip or integrated circuit (IC), such as IC 1312.

In some embodiments, the wireless radio card 1302 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 1308b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., Fifth Generation Partnership Project (5GPP) such as Long Term Evolution (LTE), LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

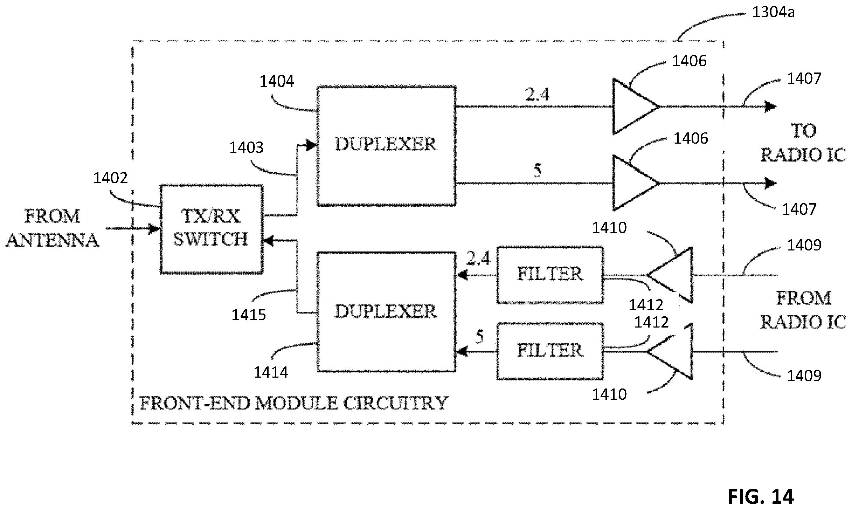

FIG. 14 illustrates WLAN FEM circuitry 1304a in accordance with some embodiments. Although the example of FIG. 14 is described in conjunction with the WLAN FEM circuitry 1304a, the example of FIG. 14 may be described in conjunction with the example BT FEM circuitry 1304b (FIG. 13), although other circuitry configurations may also be suitable.

In some embodiments, the FEM circuitry 1304a may include a transmit (TX)/receive (RX) switch 1402 to switch between transmit mode and receive mode operation. The FEM circuitry 1304a may include a receive signal path and a transmit signal path. The receive signal path of the FEM circuitry 1304a may include a low-noise amplifier (LNA) 1406 to amplify received RF signals 1403 and provide the amplified received RF signals 1407 as an output (e.g., to the radio IC circuitry 1306a-b (FIG. 13)). The transmit signal path of the circuitry 1304a may include a power amplifier (PA) to amplify input RF signals 1409 (e.g., provided by the radio IC circuitry 1306a-b), and one or more filters 1412, such as band-pass filters (BPFs), low-pass filters (LPFs) or other types of filters, to generate RF signals 1415 for subsequent transmission (e.g., by one or more of the antennas 1301 (FIG. 13)) via an example duplexer 1414.

In some dual-mode embodiments for Wi-Fi communication, the FEM circuitry 1304a may be configured to operate in either the 2.4 GHz frequency spectrum or the 5 GHz frequency spectrum. In these embodiments, the receive signal path of the FEM circuitry 1304a may include a receive signal path duplexer 1404 to separate the signals from each spectrum as well as provide a separate LNA 1406 for each spectrum as shown. In these embodiments, the transmit signal path of the FEM circuitry 1304a may also include a power amplifier 1410 and a filter 1412, such as a BPF, an LPF or another type of filter for each frequency spectrum and a transmit signal path duplexer 1404 to provide the signals of one of the different spectrums onto a single transmit path for subsequent transmission by the one or more of the antennas 1301 (FIG. 13). In some embodiments, BT communications may utilize the 2.4 GHz signal paths and may utilize the same FEM circuitry 1304a as the one used for WLAN communications.

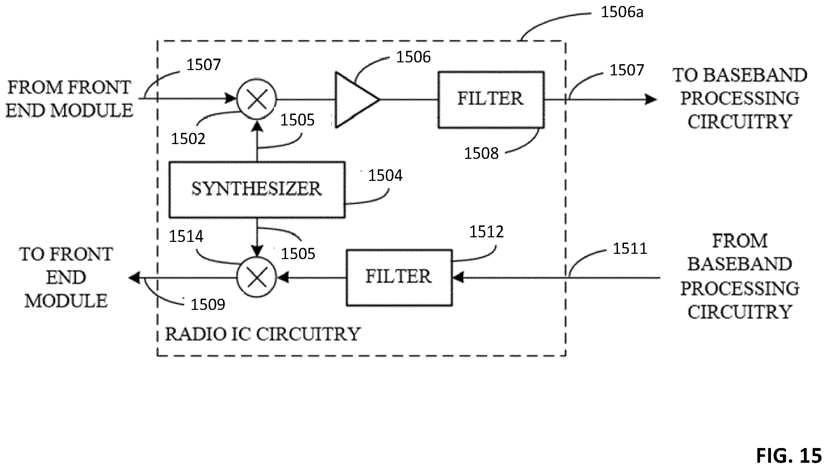

FIG. 15 illustrates radio IC circuitry 1306a in accordance with some embodiments. The radio IC circuitry 1306a is one example of circuitry that may be suitable for use as the WLAN or BT radio IC circuitry 1306a/1306b (FIG. 13), although other circuitry configurations may also be suitable. Alternatively, the example of FIG. 15 may be described in conjunction with the example BT radio IC circuitry 1306b.

In some embodiments, the radio IC circuitry 1306a may include a receive signal path and a transmit signal path. The receive signal path of the radio IC circuitry 1306a may include at least mixer circuitry 1502, such as, for example, down-conversion mixer circuitry, amplifier circuitry 1506 and filter circuitry 1508. The transmit signal path of the radio IC circuitry 1306a may include at least filter circuitry 1512 and mixer circuitry 1514, such as, for example, up-conversion mixer circuitry. Radio IC circuitry 1306a may also include synthesizer circuitry 1504 for synthesizing a frequency 1505 for use by the mixer circuitry 1502 and the mixer circuitry 1514. The mixer circuitry 1502 and/or 1514 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 15 illustrates only a simplified version of a radio IC circuitry, and may include, although not shown, embodiments where each of the depicted circuitries may include more than one component. For instance, mixer circuitry 1514 may each include one or more mixers, and filter circuitries 1508 and/or 1512 may each include one or more filters, such as one or more BPFs and/or LPFs according to application needs. For example, when mixer circuitries are of the direct-conversion type, they may each include two or more mixers.

In some embodiments, mixer circuitry 1502 may be configured to down-convert RF signals 1407 received from the FEM circuitry 1304a-b (FIG. 13) based on the synthesized frequency 1505 provided by synthesizer circuitry 1504. The amplifier circuitry 1506 may be configured to amplify the down-converted signals and the filter circuitry 1508 may include an LPF configured to remove unwanted signals from the down-converted signals to generate output baseband signals 1507. Output baseband signals 1507 may be provided to the baseband processing circuitry 1308a-b (FIG. 13) for further processing. In some embodiments, the output baseband signals 1507 may be zero-frequency baseband signals, although this is not a requirement. In some embodiments, mixer circuitry 1502 may comprise passive mixers, although the scope of the embodiments is not limited in this respect.

In some embodiments, the mixer circuitry 1514 may be configured to up-convert input baseband signals 1511 based on the synthesized frequency 1505 provided by the synthesizer circuitry 1504 to generate RF output signals 1409 for the FEM circuitry 1304a-b. The baseband signals 1511 may be provided by the baseband processing circuitry 1308a-b and may be filtered by filter circuitry 1512. The filter circuitry 1512 may include an LPF or a BPF, although the scope of the embodiments is not limited in this respect.

In some embodiments, the mixer circuitry 1502 and the mixer circuitry 1514 may each include two or more mixers and may be configured for quadrature down-conversion and/or up-conversion respectively with the help of synthesizer 1504. In some embodiments, the mixer circuitry 1502 and the mixer circuitry 1514 may each include two or more mixers each configured for image rejection (e.g., Hartley image rejection). In some embodiments, the mixer circuitry 1502 and the mixer circuitry 1514 may be configured for direct down-conversion and/or direct up-conversion, respectively. In some embodiments, the mixer circuitry 1502 and the mixer circuitry 1514 may be configured for super-heterodyne operation, although this is not a requirement.

Mixer circuitry 1502 may comprise, according to one embodiment: quadrature passive mixers (e.g., for the in-phase (I) and quadrature phase (Q) paths). In such an embodiment, RF input signal 1407 from FIG. 15 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1505 of synthesizer 1504 (FIG. 15). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 1407 (FIG. 14) may comprise a balanced signal, although the scope of the embodiments is not limited in this respect. The I and Q baseband output signals may be provided to low-noise amplifier, such as amplifier circuitry 1506 (FIG. 15) or to filter circuitry 1508 (FIG. 15).

In some embodiments, the output baseband signals 1507 and the input baseband signals 1511 may be analog baseband signals, although the scope of the embodiments is not limited in this respect. In some alternate embodiments, the output baseband signals 1507 and the input baseband signals 1511 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1504 may be a fractional-N synthesizer or a fractional N/N+1 synthesizer, although the scope of the embodiments is not limited in this respect as other types of frequency synthesizers may be suitable. For example, synthesizer circuitry 1504 may be a delta-sigma synthesizer, a frequency multiplier, or a synthesizer comprising a phase-locked loop with a frequency divider. According to some embodiments, the synthesizer circuitry 1504 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1504 may be provided by a voltage controlled oscillator (VCO), although that is not a requirement. A divider control input may further be provided by either the baseband processing circuitry 1308a-b (FIG. 13) depending on the desired output frequency 1505. In some embodiments, a divider control input (e.g., N) may be determined from a look-up table (e.g., within a Wi-Fi card) based on a channel number and a channel center frequency as determined or indicated by the example application processor 1310. The application processor 1310 may include, or otherwise be connected to, one of the example secure signal converter 101 or the example received signal converter 103 (e.g., depending on which device the example radio architecture is implemented in).

In some embodiments, synthesizer circuitry 1504 may be configured to generate a carrier frequency as the output frequency 1505, while in other embodiments, the output frequency 1505 may be a fraction of the carrier frequency (e.g., one-half the carrier frequency, one-third the carrier frequency). In some embodiments, the output frequency 1505 may be a LO frequency (fLO).

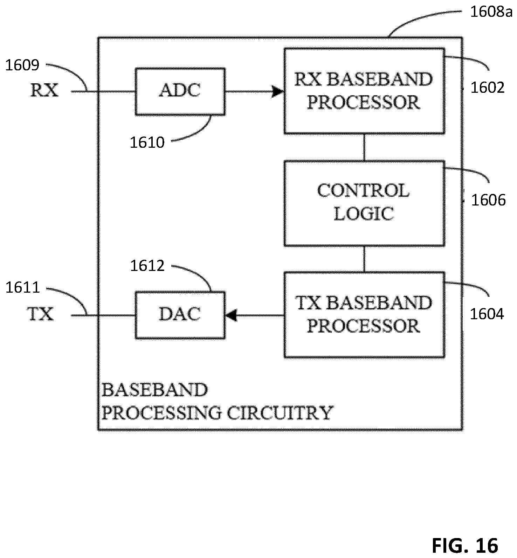

FIG. 16 illustrates a functional block diagram of baseband processing circuitry 1308a in accordance with some embodiments. The baseband processing circuitry 1308a is one example of circuitry that may be suitable for use as the baseband processing circuitry 1308a (FIG. 13), although other circuitry configurations may also be suitable. Alternatively, the example of FIG. 15 may be used to implement the example BT baseband processing circuitry 1308b of FIG. 13.

The baseband processing circuitry 1308a may include a receive baseband processor (RX BBP) 1602 for processing receive baseband signals 1509 provided by the radio IC circuitry 1306a-b (FIG. 13) and a transmit baseband processor (TX BBP) 1604 for generating transmit baseband signals 1511 for the radio IC circuitry 1306a-b. The baseband processing circuitry 1308a may also include control logic 1606 for coordinating the operations of the baseband processing circuitry 1308a.

In some embodiments (e.g., when analog baseband signals are exchanged between the baseband processing circuitry 1308a-b and the radio IC circuitry 1306a-b), the baseband processing circuitry 1308a may include ADC 1610 to convert analog baseband signals 1609 received from the radio IC circuitry 1306a-b to digital baseband signals for processing by the RX BBP 1602. In these embodiments, the baseband processing circuitry 1308a may also include DAC 1612 to convert digital baseband signals from the TX BBP 1604 to analog baseband signals 1611.

In some embodiments that communicate OFDM signals or OFDMA signals, such as through baseband processor 1308a, the transmit baseband processor 1604 may be configured to generate OFDM or OFDMA signals as appropriate for transmission by performing an inverse fast Fourier transform (IFFT). The receive baseband processor 1602 may be configured to process received OFDM signals or OFDMA signals by performing an FFT. In some embodiments, the receive baseband processor 1602 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 13, in some embodiments, the antennas 1301 (FIG. 13) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 1301 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include a device comprising processing circuitry coupled to storage, the processing circuitry configured to: generate a frame comprising one or more symbols to carry information associated with one or more station devices (STAs); cause to send the frame; and provide an explicit indication of early termination.

Example 2 may include the device of example 1 and/or some other example herein, wherein the explicit indication may be performed using the time domain.

Example 3 may include the device of example 1 and/or some other example herein, wherein the explicit indication may be performed using the frequency domain.

Example 4 may include the device of example 1 and/or some other example herein, further comprising a transceiver configured to transmit and receive wireless signals.

Example 5 may include the device of example 4 and/or some other example herein, further comprising an antenna coupled to the transceiver to cause to send the frame.

Example 6 may include a non-transitory computer-readable medium storing computer-executable instructions which when executed by one or more processors result in performing operations comprising: generating a frame comprising one or more symbols to carry information associated with one or more station devices (STAs); causing to send the frame; and providing an explicit indication of early termination.

Example 7 may include the non-transitory computer-readable medium of example 6 and/or some other example herein, wherein the explicit indication may be performed using the time domain.

Example 8 may include the non-transitory computer-readable medium of example 6 and/or some other example herein, wherein the explicit indication may be performed using the frequency domain.

Example 9 may include a method comprising: generating, by one or more processors, a frame comprising one or more symbols to carry information associated with one or more station devices (STAs); causing to send the frame; and providing an explicit indication of early termination.

Example 10 may include the method of example 9 and/or some other example herein, wherein the explicit indication may be performed using the time domain.

Example 11 may include the method of example 9 and/or some other example herein, wherein the explicit indication may be performed using the frequency domain.

Example 12 may include an apparatus comprising means for: generating a frame comprising one or more symbols to carry information associated with one or more station devices (STAs); causing to send the frame; and providing an explicit indication of early termination.

Example 13 may include the apparatus of example 12 and/or some other example herein, wherein the explicit indication may be performed using the time domain.

Example 14 may include the apparatus of example 12 and/or some other example herein, wherein the explicit indication may be performed using the frequency domain.

Example 15 may include one or more non-transitory computer-readable media comprising instructions to cause an electronic device, upon execution of the instructions by one or more processors of the electronic device, to perform one or more elements of a method described in or related to any of examples 1-14, or any other method or process described herein.

Example 16 may include an apparatus comprising logic, modules, and/or circuitry to perform one or more elements of a method described in or related to any of examples 1-14, or any other method or process described herein.

Example 17 may include a method, technique, or process as described in or related to any of examples 1-14, or portions or parts thereof.

Example 18 may include an apparatus comprising: one or more processors and one or more computer readable media comprising instructions that, when executed by the one or more processors, cause the one or more processors to perform the method, techniques, or process as described in or related to any of examples 1-14, or portions thereof.

Example 19 may include a method of communicating in a wireless network as shown and described herein.

Example 20 may include a system for providing wireless communication as shown and described herein.

Example 21 may include a device for providing wireless communication as shown and described herein.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A device (130) comprising processing circuitry, the processing circuitry configured to:
generate a transmission comprising one or more symbols;
cause a transceiver to begin sending the transmission (202); and
cause the transceiver to send an instruction (204) representing an early termination of the transmission.

2. The device of claim 1, wherein the transmission comprises a physical protocol data unit transmission according to Institute of Electrical and Electronics Engineers (IEEE) Standard 802.11 or any of its substandards.

3. The device of claim 1 or 2, wherein the processing circuitry is configured to cause the transceiver to send the instruction in time domain.

4. The device of claim 3, wherein the instruction comprises a repeated predetermined signal (502).

5. The device of claim 3 or 4, wherein the instruction comprises a repeated Short Training Field (STF) signal.

6. The device of claim 3 or 4, wherein the instruction comprises a first signal and a second signal, wherein the first signal is a Zadoff-Chu sequence, and wherein the second signal is the Zadoff-Chu sequence as modified by predefined cyclic shift.

7. The device of claim 1 or 2, wherein the processing circuitry is configured to cause the transceiver to send the instruction in frequency domain.

8. The device of claim 7, wherein the instruction comprises a predefined signal sent on one or more subcarriers.

9. The device of any one of claims 3 to 8, wherein the instruction comprises a reduction of power (702) on one or more subcarriers.

10. The device of claim 9, wherein the instruction further comprises an increase of power (704) on the one or more subcarriers, at a predefined duration following the reduction of power.

11. The device of any one of claims 1 to 10, wherein the processing circuitry is further configured to send a padding signal (706) following the instruction, wherein the padding signal (706) is configured to occupy a channel in which the instruction is sent until a next transmission by the device.

12. The device of any one of claims 1 to 11, wherein the device is connected to a wireless access point in a multiple basic service set (BSS) environment, and wherein the instruction comprises an identifier specific to the device.

13. The device of any one of claims 1 to 12, further comprising the transceiver.

14. A method of sending an early termination notification, comprising:
generating a transmission comprising one or more symbols;
causing a transceiver to begin sending the transmission; and
causing the transceiver to send an instruction representing an early termination of the transmission.

15. A computer readable storage medium, comprising instructions, which, if executed by one or more processors, cause the one or more processors to:
generate a transmission comprising one or more symbols;
cause a transceiver to begin sending the transmission; and
cause the transceiver to send an instruction representing an early termination of the transmission.
